(19) Europäisches Patentamt
European Patent Office
Office européen des brevets

(11) **EP 1 050 983 B1**

(12) **EUROPÄISCHE PATENTSCHRIFT**

(45) Veröffentlichungstag und Bekanntmachung des Hinweises auf die Patenterteilung:
**20.07.2005   Patentblatt 2005/29**

(51) Int Cl.$^7$: **H04H 1/00**, H03D 1/22

(21) Anmeldenummer: 00201519.6

(22) Anmeldetag: **25.04.2000**

(54) **Digitaler AM-Demodulator**

Digital AM demodulator

Démodulateur AM numérique

(84) Benannte Vertragsstaaten:
**DE FR GB**

(30) Priorität: **04.05.1999   DE 19920362**

(43) Veröffentlichungstag der Anmeldung:
**08.11.2000   Patentblatt 2000/45**

(73) Patentinhaber:
• **Philips Intellectual Property & Standards GmbH**
  **20099 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder: **Meyer, Matthias**
  **52064 Aachen (DE)**

(74) Vertreter: **Volmer, Georg, Dipl.-Ing. et al**
  **Philips Intellectual Property & Standards GmbH,**
  **Postfach 50 04 42**
  **52088 Aachen (DE)**

(56) Entgegenhaltungen:
  **DE-A- 4 434 451          US-A- 5 561 716**

• **WALTHER J S: "A UNIFIED ALGORITHM FOR ELEMENTARY FUNCTIONS" PROCEEDINGS OF THE SPRING JOINT COMPUTER CONFERENCE. ATLANTIC CITY, 18 - 20 MAY, 1971, JOINT COMPUTER CONFERENCE, BALTIMORE, SPARTAN BOOKS, US, Bd. NG 1971 VOL. 38, 18. Mai 1971 (1971-05-18), Seiten 379-385, XP001022227**

**Beschreibung**

Die Erfindung betrifft einen digitalen Demodulator zur AM-Demodulation eines in einem digitalen Multiplexsignal enthaltenen Differenz-Tonsignals, wobei das Multiplexsignal außerdem ein Summen-Tonsignal in Basisbandlage und einen Pilottonträger mit einer Pilottonfrequenz enthält und wobei das Differenz-Tonsignal einem Träger mit der zweifachen Pilottonfrequenz aufmoduliert ist. Derartige Demodulatoren sind z.B. aus dem Dokument US 5 561 716 A bekannt.

Derartige Multiplexsignale werden sowohl für Fernseh- wie auch für Tonrundfunkanwendungen eingesetzt. Der Demodulator soll diejenigen Signalanteile, die in dem Multiplexsignal nicht in Basisbandlage vorliegen, demodulieren. In vielen Fällen ist vorteilhaft ferner eine Pilotton-Trägerunterdrückung wünschenswert.

Konzepte bekannter analoger Demodulatoren für derartige Signale sind auf eine digitale Signalverarbeitung nicht sinnvoll übertragbar. Ferner sollte für digitale Demodulatoren im Gegensatz zu analogen Demodulatoren eine Abgleichfreiheit gegeben sein.

Es ist daher Aufgabe der Erfindung, einen digitalen Demodulator zu schaffen, welcher bei möglichst geringem Aufwand abgleichfrei arbeitet.

Diese Aufgabe ist dadurch gelöst, daß CORDICs vorgesehen sind, welche eine Koordinatentransformation von Polarkoordinaten in kartesische Koordinaten vornehmen und welche jeweils einen Phaseneingang, zwei den Koordinaten x bzw. y zugeordnete Amplitudeneingänge und zwei den Koordinaten x bzw. y zugeordnete Ausgänge aufweisen, daß ein Phasenregelkreis mit einem ersten CORDIC, einem Schleifenfilter und einem Akkumulator vorgesehen ist, der ein Phasenrampensignal liefert, dessen Wiederholfrequenzvon dem Eingangssignal des Akkumulators abhängig ist, daß das Multiplexsignal auf einen Amplitudeneingang des ersten CORDIC, das Ausgangssignal des Akkumulators auf den Phaseneingang des ersten CORDIC und derjenige Ausgang des ersten CORDIC, der nicht der gleichen Koordinate zugeordnet ist wie der verwendete Amplitudeneingang, auf das Schleifenfilter gekoppelt werden, dessen Ausgangssignal mittels einer ersten Überlagerungsstufe mit einem Frequenz-auswahlsignal, das eine Pilotton-Sollfrequenz angibt, überlagert und das Ausgangssignal der Überlagerungsstufe auf den Akkumulatoreingang gekoppelt wird, daß ein zweiter CORDIC vorgesehen ist, auf dessen einen Amplitudeneingang das Multiplexsignal mit unterdrücktem Pilotton und auf dessen Phaseneingang das Ausgangssignal eines Multiplizierers gekoppelt ist, auf welchen eingangsseitig das Ausgangssignal des Akkumulators gekoppelt ist und der dieses mit dem Faktor zwei multipliziert, und daß der zweite CORDIC ausgangsseitig das demodulierte Differenz-Tonsignal liefern.

In dem Demodulator sind sogenannte CORDICs vorgesehen, deren Bezeichnung für "Coordinate Rotational Digital Computer" steht, sind per se beispielsweise aus der Veröffentlichung "A unified algorithm for elementary functions" von J.S. Walther, publiziert in Spring Yoint Computer conference 1071, S. 379-385, bekannt.

In einem CORDIC können einfache Signal-Operationen, wie beispielsweise Binärshift, Additionen, Subtraktionen und ein Abrufen von Konstanten vorgenommen werden. Somit haben CORDICs eine einfache, kompakte und integrierbare Struktur.

Ein CORDIC kann, wie dies auch bei der Erfindung vorgesehen ist, in einem sogenannten Rotationmode arbeiten, in welchem er ein polares Signal in ein kartesisches Signal umrechnet. Er weist hierfür zwei Amplitudeneingänge und einen Phaseneingang auf, an denen ihm ein Signal in polaren Koordinaten zugeführt wird. An den beiden Amplitudeneingängen kann ein Quadratursignal eingespeist werden; es kann aber auch an nur einem der beiden Amplitudeneingänge ein einziges Signal zugeführt werden. An zwei Ausgängen liefert der CORDIC das in kartesische Koordinaten umgewandelte Signal.

Bei dem in der Erfindung vorgesehenen Phasenregelkreis, der mit einem ersten CORDIC arbeitet, wird dieser in Verbindung mit einem Akkumulator, der ebenfalls Bestandteil des Phasenregelkreises ist, eingesetzt. Der Akkumulator liefert ein Sägezahn-Signal, das dem Phaseneingang des CORDIC zugeführt wird. In dieser Verschaltung sind CORDIC und Akkumulator vergleichbar mit Mischer und Oszillator in analogen Phasenregelkreisen.

Die Frequenz bzw. das Frequenzspektrum, das dem ersten CORDIC, der Bestandteil des Phasenregelkreises ist, an einem Amplitudeneingang zugeführt wird, wird mit der Wiederholfrequenz des vom Akkumulator gelieferten Sägezahnsignals gemischt, so daß entsprechende Frequenzverschiebungen des Frequenzspektrums des Eingangssignals wie bei analogen bekannten Mischern entstehen. Diese Eigenschaft der CORDICs im Zusammenspiel mit dem Akkumulator wird in der erfindungsgemäßen Schaltung eingesetzt.

Es spielt dabei grundsätzlich keine entscheidende Rolle, welcher der beiden Amplitudeneingänge des ersten CORDICs eingesetzt wird, da die Ausgangssignale des CORDICs von dem gewählten Eingang nur bezüglich der Phasenlage abhängig sind. Daher wird das Ausgangssignal desjenigen Ausgangs des CORDIC auf das Schleifenfilter gekoppelt, der nicht der gleichen Koordinate zugeordnet ist, wie der gewählte Eingang des CORDICs. Mit anderen Worten, es werden ein Eingang und ein Ausgang des CORDIC gewählt, die nicht der gleichen Koordinate, also nicht beide der x- bzw. beide der y-Koordinate zugeordnet sind.

Das Ausgangssignal des Schleifenfilters wird in eine Überlagerungsstufe mit einem Frequenzauswahlsignal überlagert. Über dessen Größe ist die Pilotton-Sollfrequenz einstellbar, auf die der Phasenregelkreis rasten soll. Das Ausgangssignal der Überlagerungsstufe wird auf den Akkumulatoreingang gekoppelt. Die Wiederholfrequenz von dessen Sägezahnsignal, das wiederum auf den Phaseneingang des ersten CORDIC gekoppelt ist, ist abhängig von seinem Eingangssignal, also einerseits von dem Frequenzauswahlsignal und andererseits von dem Zustand des Phasenregelkreises.

In dem erfindungsgemäßen digitalen Demodulator ist ein zweiter CORDIC vorgesehen, der diejenigen Signalanteile in dem Multiplexsignal demoduliert, die nicht in Basisbandlage vorliegen. Auf einen der Amplitudeneingänge des zweiten CORDIC wird das Multiplexsignal gekoppelt, vorzugsweise mit bereits unterdrücktem Pilotton. Der Phaseneingang des zweiten CORDICs ist wiederum mit dem Ausgangssignal eines Multiplizierers gekoppelt, auf den eingangsseitig das Ausgangssignal des Akkumulators des Phasenregelkreises gekoppelt ist. Der Multiplizierer multipliziert dieses Signal mit dem Faktor 2, was in einer digitalen Schaltung durch einfachen Shift um eine Position erzielbar ist.

Auf diese Weise gelingt es, dem zweiten CORDIC zur Demodulation des Differenz-Tonsignals die erforderliche Pilottonfrequenz zuzuführen. Dies ist in der Schaltung auf äußerst einfache Weise durch einen Shift der Ausgangswerte des Akkumulators möglich, da zur Demodulation die doppelte Frequenz der Pilottonfrequenz erforderlich ist und der Phasenregelkreis im eingerasteten Zustand exakt auf der Pilottonfrequenz arbeitet. Somit ist mittels des zweiten CORDIC eine äußerst präzise Demodulation des Differenz-Tonsignals möglich, das einem Träger mit der zweifachen Pilottonfrequenz aufmoduliert ist.

Der Phasenregelkreis kann vorteilhaft so ausgelegt werden, daß er äußerst schmalbandig arbeitet, so daß dem Amplitudeneingang des ersten CORDIC des Phasenregelkreises kein gesondertes Pilottonfilter vorzuschalten ist. Der Demodulator arbeitet abgleichfrei und benötigt keine externen Komponenten, die nicht integrierbar wären.

Eine gemäß Anspruch 2 vorgesehene Ausgestaltung der Erfindung sieht einen dritten CORDIC vor, der zur Pilottonunterdrückung eingesetzt wird.

Für diesen dritten CORDIC wird auf die Signale des Phasenregelkreises zurückgegriffen, so daß eine sehr exakte Pilottonunterdrückung möglich ist, da der Phasenregelkreis exakt auf der Pilottonfrequenz schwingt. Einem Amplitudeneingang des dritten CORDIC wird dazu über ein Tiefpaßfilter ein Ausgangssignal des ersten CORDIC zugeführt. Dem Phaseneingang des dritten CORDIC wird wiederum das Ausgangssignal des Akkumulators des Phasenregelkreises zugeführt. Somit liefert der dritte CORDIC ausgangsseitig ein Signal, das in Frequenz, Amplitude und in Phase exakt mit dem Pilotton in dem Multiplexsignal übereinstimmt und somit in einer Überlagerungsstufe zu dessen Auslöschung führt.

Vorteilhaft kann das Multiplexsignal, das die Überlagerungsstufe liefert und in dem der Pilottonträger unterdrückt ist, dem dritten CORDIC an einem seiner Amplitudeneingänge zugeführt werden.

Der dritte CORDIC gestattet also eine äußerst präzise und wirksame Unterdrückung des Pilottons in dem Multiplexsignal.

Gemäß einer weiteren Ausgestaltung der Erfindung nach Anspruch 3 wird das tiefpaßgefilterte Ausgangssignal eines Amplitudenausgangs des ersten CORDIC für eine Erkennung des Rastzustandes des Phasenregelkreises eingesetzt. Aus dem tiefpaßgefilterten Signal kann nämlich unmittelbar auf den Rastzustand des Phasenregelkreises geschlossen werden. In Abhängigkeit dieses Rastzustandes kann vorteilhaft das Ausgangssignal des dritten CORDIC, das der Überlagerungsstufe zugeführt wird, sowie das Eingangssignal des zweiten CORDIC geschaltet werden. Es werden diese Signale nur dann durchgeschaltet, wenn sich der Phasenregelkreis im gerasteten Zustand befindet. Dies hat zur Folge, daß die Schaltung nur dann ausgangsseitig Signale liefert, wenn sich der Phasenregelkreis im gerasteten Zustand befindet und die Signale gültige demodulierte Signale darstellen. Während der übrigen Zeiten werden gegebenenfalls auftretende Störsignale unterdrückt.

Ein gemäß einer weiteren Ausgestaltung der Erfindung nach Anspruch 4 vorgesehenes Tonsignal-Tiefpaßfilter liefert ausgangsseitig das Summen-Tonsignal des Multiplexsignals sowie das demodulierte Differenz-Tonsignal dieses Signals. Infolge eines vorgesehenen Verzögerungsgliedes, welches die Phasenverschiebung durch den zweiten CORDIC ausgleicht, befinden diese beiden Signale sich zueinander in der gewünschten Phasenlage.

Gemäß den Ansprüchen 5 und 6 können gemäß weiteren Ausgestaltungen der Erfindung weitere Verzögerungsglieder vorgesehen sein, welche dazu dienen, die der zweiten Überlagerungsstufe, mittels welcher der Pilottonträger in dem Multiplexsignal unterdrückt wird, und das dem zweiten CORDIC an seinem Phaseneingang zugeführte Signal jeweils so zu verzögern, daß diese Signale jeweils die gewünschte Phasenlage aufweisen. Damit ist eine optimale Arbeitsweise der zweiten Überlagerungsstufe bzw. des zweiten CORDIC gewährleistet.

Wie gemäß weiteren Ausgestaltungen der Erfindung vorgesehen ist, kann der erfindungsgemäße digitale Demodulator zur Demodulation eines BTSC-Signals, wie es für Fernsehanwendungen bekannt ist, aber auch zur Demodulation eines FM-Stereo-Tonsignals für Tonrundfunkanwendungen eingesetzt werden.

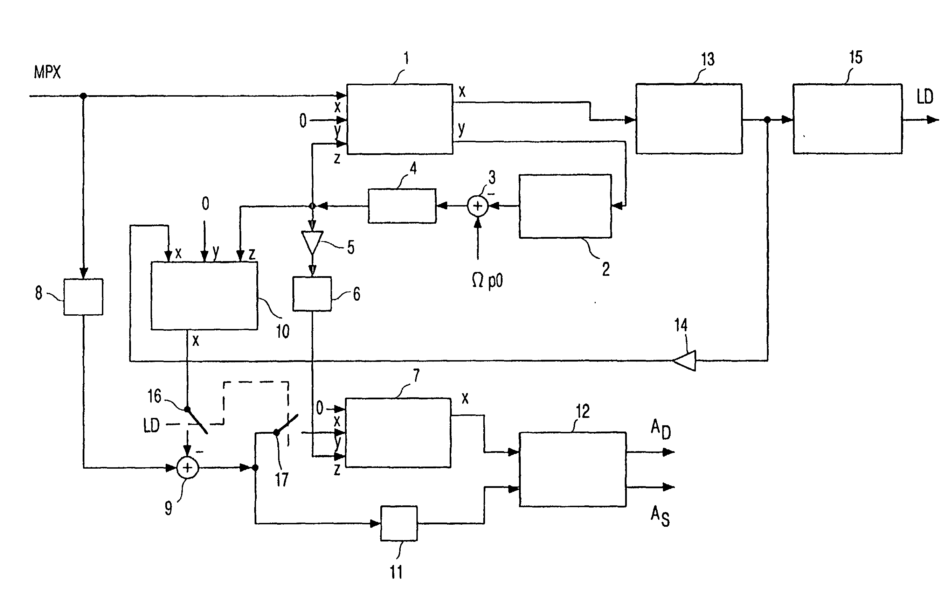

Nachfolgend wird ein Ausführungsbeispiel der Erfindung anhand der Zeichnung näher erläutert.

Die einzige Figur der Zeichnung zeigt ein Blockschaltbild des erfindungsgemäßen digitalen AM-Demodulators zur Demodulation und Pilottonunterdrückung eines Multiplexsignals, bei dem es sich um ein sogenanntes BTSC-Tonsignal für Fernsehanwendungen handelt.

Ein derartiges Signal weist in Basisbandlage ein Summen-Tonsignal auf. Ferner weist es einen Pilottonträger mit einer Pilottonfrequenz auf. In dem Signal ist ferner ein Differenz-Tonsignal enthalten, das einem Träger mit der zweifachen Pilottonfrequenz aufmoduliert ist.

Aufgabe des Demodulators ist es, das ausgefilterte Summen-Tonsignal und das demodulierte Differenz-Tonsignal zu liefern.

Ein wesentliches Element des erfindungsgemäßen digitalen Demodulators sind sogenannte CORDICs, deren Bezeichnung für "Coordinate Rotational Digital Computer" steht und deren Funktion oben bereits erläutert wurde.

In dem oben erläuterten Votationmode, in dem ein CORDIC ein polares Signal in ein kartesisches Signal umrechnet, stehen die Eingangssignale $x_{in}$, $y_{in}$ sowie der Phaseneingang $z_{in}$ zu den Ausgangssignalen $x_{out}$ und $y_{out}$ in folgenden Beziehungen:

$$x_{out}+j\, y_{out} = (x_{in}+j\, y_{in}) \cdot \exp(j\, z_{in}) \cdot k_{cordic} = (x_{in}+j\, y_{in}) \cdot (\cos z_{in}+j \sin z_{in}) \cdot k_{cordic} \qquad (1)$$

Wenn $y_{in}=0$ ist, gilt außerdem:

$$x_{out}+j\, y_{out} = x_{in}(\cos z_{in}+j \sin z_{in}) \qquad (2)$$

Dabei ist $k_{cordic}$ eine Konstante die meist etwa 1,64 beträgt.

In der erfindungsgemäßen Schaltung wird jeweils nur ein Amplitudeneingang der CORDICs verwendet. Wird beispielsweise nur der Amplitudeneingang $x_{in}$ verwendet und dem zweiten Amplitudeneingang $y_{in}$ ein Signal gleich Null zugeführt, so vereinfachen sich diese beiden Gleichungen zu folgenden Beziehungen:

$$x_{out} = x_{in} \cdot \cos z_{in} \cdot k_{cordic} \qquad (3)$$

$$y_{out} = x_{in} \cdot \sin z_{in} \cdot k_{cordic} \qquad (4).$$

Wenn $y_{in}$ als Eingang benutzt wird, gilt:

$$x_{out} = -y_{in} \sin z_{in} \cdot k_{cordic}$$

$$y_{out} = y_{in} \cos z_{in} \cdot k_{cordic}$$

Man sieht an diesen Gleichungen, daß sich die beiden Ausgangssignale $x_{out}$ und $y_{out}$ nur durch ihre Phasenlage voneinander unterscheiden. Für die erfindungsgemäße Anordnung ist es jedoch wesentlich, welches Ausgangssignal jeweils verwendet wird. Entsprechendes gilt, wenn statt des $x_{in}$-Eingangs der $y_{in}$-Eingang benutzt wird. Dann ergibt sich zwar für die Ausgangssignale insgesamt eine andere Phasenlage als bei benutztem $x_{in}$-Eingang, auch diese Signale unterscheiden sich jedoch wieder nur in der Phasenlage. Daher wird für die CORDICs in dem erfindungsgemäßen digitalen Demodulator nicht vorgeschrieben, welcher Eingang zu benutzten ist. Entscheidend ist jedoch, daß abhängig davon, welcher Eingang der Amplitudeneingänge tatsächlich gewählt wurde, jeweils derjenige Amplitudenausgang gewählt wird, der ein Ausgangssignal in der gewünschten oder erforderlichen Phasenlage liefert. Daher wird im folgenden für den zu wählenden Ausgang und die diesem zugeordnete Koordinate, also die Ausgänge $x_{out}$ oder $y_{out}$, jeweils Bezug genommen auf den gewählten Eingang und die diesem zugeordnete Koordinate, also auf die Amplitudeneingänge $x_{in}$ oder $y_{in}$.

Die einzige Figur zeigt ein Blockschaltbild eines erfindungsgemäßen digitalen AM-Demodulators, dem eingangsseitig das oben erwähnte Multiplexsignal MPX zugeführt wird. Dieses gelangt an eine der Amplitudeneingänge eines ersten CORDIC 1. In dem Beispiel gemäß der Figur wurde der der x-Koordinate zugeordnete Amplitudeneingang gewählt. Der andere Amplitudeneingang, in dem Beispiel gemäß der Figur der der y-Koordinate zugeordnete Amplitudeneingang, wird auf Null gesetzt.

Der erste CORDIC 1 bildet zusammen mit einem Schleifenfilter 2 und einem Akkumulator 4 einen Phasenregelkreis.

Dem Schleifenfilter 2 wird das Ausgangssignal desjenigen Ausgangs des ersten CORDICs zugeführt, der der anderen Koordinate zugeordnet ist als der gewählte Eingang. Da in dem Beispiel gemäß der Figur der gewählte Eingang der x-Koordinate zugeordnet ist, wird für den Ausgang, dessen Signal dem Schleifenfilter 2 zugeführt wird, der der y-Koordinate zugeordnete Ausgang gewählt.

Dem Schleifenfilter 2 ist eine erste Überlagerungsstufe 3 nachgeordnet, der ein Frequenz-auswahlsignal $\Omega_{p0}$ zugeführt wird und welche von diesem Signal das Ausgangssignal des Schleifenfilters 2 subtrahiert. Der ersten Überlagerunsstufe 3 ist ein Akkumulator 4 nachgeschaltet, dessen Ausgangssignal auf einen Phaseneingang z des ersten CORDIC 1 gekoppelt wird.

Der Akkumulator 4 liefert ein Phasenrampensignal, dessen Wiederholfrequenz von seinem Eingangssignal abhängig ist, also von dem Frequenzauswahlsignal $\Omega_{p0}$ sowie den mittels des Schleifenfilters 2 gefilterten Ausgangssignals des ersten CORDIC.

Mittels des Frequenzauswahlsignals $\Omega_{p0}$ kann diejenige Frequenz eingestellt werden, auf die der Phasenregelkreis rasten soll.

In dieser Verschaltung bilden der erste CORDIC und der Akkumulator gemeinsam eine Funktion, die etwa einem Mischer und Oszillator in einem konventionellen Phasenregelkreis entspricht. Es kann also auf diese einfache Weise ein Mischer und gesteuerter Oszillator in einem digitalen Phasenregelkreis realisiert werden. Der Phasenregelkreis ist dazu ausgelegt, auf die Pilottonfrequenz des in dem Multiplexsignal MPX vorhandenen Pilottonträgers einzurasten. Je nach dessen nominaler Frequenz wird das Frequenzauswahlsignal $\Omega_{p0}$ passend fest eingestellt. Somit schwingt der Phasenregelkreis, gebildet aus dem ersten CORDIC 1, dem Schleifenfilter 2 und dem Akkumulator 4 im eingerasteten Zustand exakt auf der Frequenz des Pilottonträgers in dem Multiplexsignal MPX. Diese Eigenschaft wird im folgenden für die Demodulation und die Pilottonträgerunterdrückung eingesetzt.

Hierzu wird das Ausgangssignal des Akkumulators 4 einem Multiplizierer 5 zugeführt. Dieser nimmt eine Multiplikation dieses Signals mit dem Faktor 2 vor, was bei digitalen Schaltungen auf äußerst einfache Weise durch einen Shift des Signals um eine Position zu erzielen ist. Dem Multiplizierer 5 ist ein drittes Verzögerungsglied 6 nachgeschaltet, dessen Ausgangssignal auf einen Phaseneingang z eines zweiten CORDIC 7 gekoppelt ist.

Auf einen Amplitudeneingang des zweiten CORDIC 7, in der Darstellung gemäß der Figur auf den der y-Koordinate zugeordneten Amplitudeneingang, ist das MPX-Signal gekoppelt, in welchem der Pilottonträger unterdrückt ist.

In dem Ausführungsbeispiel gemäß der Figur wird hierzu das Multiplexsignal MPX zunächst mittels eines zweiten Verzögerungsgliedes 8 so sehr verzögert, daß eine eventuelle Verarbeitungszeit des Blocks 10 ausgeglichen und daß in einer Überlagerungsstufe 9, welche eine invertierenden Eingang aufweist, eine Pilottonträgerunterdrückung erfolgt, auf die im folgenden noch einzugehen ist. Das Ausgangssignal der Überlagerungsstufe 9 gelangt auf den bereits erwähnten Amplitudeneingang des zweiten CORDIC 7, welcher ausgangsseitig an einem Amplitudenausgang, in dem Beispiel gemäß der Figur an dem der x-Koordinate zugeordneten Amplitudenausgang, das demodulierte Differenz-Tonsignal liefert, sowie weitere entsprechend der Mischfrequenz verschobene Signalanteile des Multiplexsignals. Um diese auszufiltern, ist dem zweiten CORDIC 7 ein Filter 12 nachgeschaltet, dem einerseits das Ausgangssignal des zweiten CORDIC 7 sowie andererseits das mittels eines ersten Verzögerungsgliedes 11 verzögerte Ausgangssignal der zweiten Überlagerungsstufe 9 zugeführt wird. Dabei ist das erste Verzögerungsglied 11 so ausgelegt, daß das Tonsignal-Tiefpaßfilter 12 ausgangsseitig das Summen-Tonsignal $A_S$ und das Differenz-Tonsignal $A_D$ in zueinander korrekter Phasenlage liefert.

Die Demodulation des Differenz-Tonsignals mittels des zweiten CORDIC 7 gelingt deshalb in hervorragender Weise, da diesem an seinem Phaseneingang z ein Signal mit der exakt zweifachen Frequenz des Pilottonträgers zugeführt wird. Dieses wiederum gelingt, da der oben erläuterte digitale Phasenregelkreis exakt auf der Frequenz des Pilottonträgers arbeitet und diese Arbeitsfrequenz mittels des Multiplizierers 5 um den Faktor 2 multipliziert wurde. Die bereits erwähnte, in der Überlagerungsstufe 9 stattfindende Unterdrückung des Pilottonträgers in dem Multiplexsignal mittels eines dritten CORDIC 10 gelingt letztlich ebenfalls aus dem Grunde, daß der Phasenregelkreis exakt auf der Pilottonträgerfrequenz arbeitet. Es wird nämlich demjenigen Amplitudenausgang des ersten CORDIC 1, der der gleichen Koordinate zugeordnet ist wie der als Eingang gewählte Amplitudeneingang, ein Signal entnommen, das mittels eines Tiefpaßfilters 13 tiefpaßgefiltert wird und nach Verstärkung mittels eines Verstärkers 14 einem Amplitudeneingang des dritten CORDIC 10 zugeführt wird. Der Phaseneingang des dritten CORDIC 10 ist, wie oben bereits erläutert, auf den Ausgang des Akkumulators 4 des Phasenregelkreises gekoppelt.

Der dritte CORDIC 10 liefert somit an denjenigen Amplitudenausgang, der der gleichen Koordinate zugeordnet ist wie der gewählte Amplitudeneingang, in dem Beispiel gemäß der Figur der der x-Koordinate zugeordnete Amplitudenausgang, ein Signal, welches in Phase und Frequenz exakt dem Pilotton in dem Multiplexsignal MPX entspricht. Dieses Signal ist daher in der Überlagerungsstufe 9 nur noch subtraktiv zu überlagern, so daß eine Auslöschung des Pilottons stattfindet. Um gegebenenfalls vorhandene Zeitverzögerungen durch die Schaltungselemente der Schaltung auszugleichen, wird dazu das Multiplexsignal mittels des zweiten Verzögerungsgliedes 8 in geeigneter Weise verzögert.

Somit liefert die Überlagerungsstufe 9 ausgangsseitig ein Signal, das dem Multiplexsignal entspricht, in dem

jedoch der Pilottonträger unterdrückt ist. In diesem Signal wird anschließend das Summentonsignal mittels des Tonsignal-Tiefpaßfilters 12 ausgefiltert, welches für zwei Signalpfade exakt gleiche Frequenzgänge realisiert und ebenfalls das mittels des zweiten CORDIC 7 demodulierte Differenz-Tonsignal ausfiltert und ausgangsseitig zur Verfügung stellt.

Um sicherzustellen, daß der digitale AM-Demodulator nur dann ein Ausgangsignal liefert, wenn dieses Signal gültig ist und nicht etwa durch Verzerrungen oder durch nicht gerasteten Zustand des Phasenregelkreises gestört ist, ist ein Lock-Detektor 15 vorgesehen. Der Lock-Detektor 15 ist dem Tiefpaßfilter 13 nachgeschaltet und erkennt anhand der tiefpaßgefilterten Ausgangsamplitude des ersten CORDIC ob der Phasenregelkreis gerastet ist und ein konstantes Signal hinreichender Amplitude liefert. Nur während derjenigen Zeiten, während derer dieses erkannt wird und während derer der Phasenregelkreis sich im gerasteten Zustand befindet, liefert der Lock-Detektor 15 ein Lock-Detektor-Signal LD, welches Schaltern 16 und 17 zugeführt wird und welches diese während derjenigen Zeiten, während der dieses Signal auftritt, schließen läßt.

Der erste Schalter 16 ist dabei in den Signalweg zwischen dem dritten CORDIC 10 und der zweiten Überlagerungsstufe 9 geschaltet. Der zweite Schalter 17 ist in den Übertragungsweg zwischen der zweiten Überlagerungsstufe 9 und dem Amplitudeneingang des zweiten CORDIC 7 geschaltet. Somit kann mittels der Schalter 16 und 17 die Pilottonträger-Unterdrückung und die AM-Demodulation des Differenztonsignals während derjenigen Zeiten unterdrückt werden, in denen sich der Phasenregelkreis nicht im gerasteten Zustand befindet und während derer infolgedessen ohnehin eine korrekte Demodulation nicht möglich wäre, zum Beispiel wenn kein Pilotton vorhanden ist, weil ein Mono-TonSignal übertragen wird. Befindet sich hingegen der Phasenregelkreis im gerasteten Zustand, so werden die Schalter geschlossen und es findet eine AM-Demodulation des Differenz-Tonsignals sowie eine Pilottonträger-Unterdrückung statt.

Dieses gelingt mittels der erfindungsgemäßen Schaltung auf äußerst einfache Weise, da ohne weitere externe Beschaltung und ohne gesonderte Pilottonfilter sowohl die AM-Demodulation sowie auch die Unterdrückung des Pilottons mittels CORDICs gelingt. Die CORDICs gestatten in der Schaltung einen einfach zu realisierenden Phasenregelkreis, der in Frequenz und Phase exakt auf der Frequenz des Pilottonträgers arbeitet. Daher kann das Signal des Phasenregelkreises sowohl in optimaler Weise für die AM-Demodulation sowie auch für die Pilotonträger-Unterdrükkung, welche mittels zweier weiterer CORDIC stattfinden, herangezogen werden. Ferner arbeitet die Schaltung abgleichfrei und benötigt keinerlei Elemente, die nicht voll integrierbar wären.

## Patentansprüche

1. Digitaler Demodulator zur AM-Demodulation eines in einem digitalen Multiplexsignal enthaltenen Differenz-Tonsignals, wobei das Multiplexsignal außerdem ein Summen-Tonsignal in Basisbandlage und einen Pilotonträger mit einer Pilotonfrequenz enthält und wobei das Differenz-Tonsignal einem Träger mit der zweifachen Pilottonfrequenz aufmoduliert ist, **dadurch gekennzeichnet, daß** CORDICs (1,7) vorgesehen sind, welche eine Koordinatentransformation von Polarkoordinaten in kartesische Koordinaten vornehmen und welche jeweils einen Phaseneingang, zwei den Koordinaten x bzw. y zugeordnete Amplitudeneingänge und zwei den Koordinaten x bzw. y zugeordnete Ausgänge aufweisen, daß ein Phasenregelkreis mit einem ersten CORDIC (1), einem Schleifenfilter (2) und einem Akkumulator (4) vorgesehen ist, der ein Phasenrampensignal liefert, dessen Wiederholfrequenz von dem Eingangssignal des Akkumulators abhängig ist, daß das Multiplexsignal auf einen Amplitudeneingang des ersten CORDIC (1), das Ausgangssignal des Akkumulators (4) auf den Phaseneingang des ersten CORDIC (1) und derjenige Ausgang des ersten CORDIC (1), der nicht der gleichen Koordinate zugeordnet ist wie der verwendete Amplitudeneingang, auf das Schleifenfilter (4) gekoppelt werden, dessen Ausgangssignal mittels einer ersten Überlagerungsstufe (3) mit einem Frequenz-auswahlsignal, das eine Pilotton-Sollfrequenz angibt, überlagert und das Ausgangssignal der Überlagerungsstufe (3) auf den Akkumulatoreingang (4) gekoppelt wird, daß ein zweiter CORDIC (7) vorgesehen ist, auf dessen einen Amplitudeneingang das Multiplexsignal mit unterdrücktem Pilotton und auf dessen Phaseneingang das Ausgangssignal eines Multiplizierers (5) gekoppelt ist, auf welchen eingangsseitig das Ausgangssignal des Akkumulators (4) gekoppelt ist und der dieses mit dem Faktor zwei multipliziert, und daß der zweite CORDIC (7) ausgangsseitig das demodulierte Differenz-Tonsignal liefert.

2. Demodulator nach Anspruch 1, **dadurch gekennzeichnet, daß** ein dritter CORDIC (10) vorgesehen ist, der die Pilottonfrequenz mit exakter Phase und Frequenz erzeugt, daß ein Tiefpaßfilter (13) vorgesehen ist, auf dessen Eingang das Signal desjenigen Ausgangs, der der gleichen Koordinate zugeordnet ist wie der verwendete Amplitudeneingang des ersten CORDIC (1), gekoppelt ist und dessen Ausgangssignal auf einen Amplitudeneingang des dritten CORDIC (10) gekoppelt ist, dessen Ausgangssignal an demjenigen Ausgang, der der gleichen Koordinate zugeordnet ist wie der verwendete Amplitudeneingang, in einer zweiten Überlagerungsstufe (9) mit dem Multiplexsignal überlagert wird, wobei die zweite Überlagerungsstufe (9) ausgangsseitig das Signal mit unterdrücktem Pilotton liefert, das auf den Amplitudeneingang des zweiten CORDIC (7) gekoppelt ist.

EP 1 050 983 B1

**3.** Demodulator nach Anspruch 2, **dadurch gekennzeichnet, daß** das Ausgangssignal des Tiefpaßfilters (13) auf einen Lock-Detektor (15) geführt ist, welcher detektiert, wann der Phasenregelkreis sich im eingerasteten Zustand befindet und welcher ein Lock-Detektor-Signal liefert, in Abhängigkeit dessen das Ausgangssignal des dritten CORDIC (10) und das Eingangssignal des zweiten CORDIC (7) mittels Schaltern (16,17) nur dann durchgeschaltet werden, wenn sich der Phasenregelkreis im eingerasteten Zustand befindet.

**4.** Demodulator nach Anspruch 2, **dadurch gekennzeichnet, daß** ein Tonsignal-Tiefpaßfilter (12) vorgesehen ist, welchem das Ausgangssignal desjenigen Ausgangs des zweiten CORDIC (7), der nicht der gleichen Koordinate zugeordnet ist wie der benutzte Eingang, und das mittels eines ersten Verzögerungsgliedes (11) verzögerte Ausgangssignal der zweiten Überlagerungsstufe (9) zugeführt werden und welcher ausgangsseitig das demodulierte Differenz-Tonsignal sowie das gefilterte Summen-Tonsignal liefert.

**5.** Demodulator nach Anspruch 2, **dadurch gekennzeichnet, daß** ein zweites Verzögerungsglied (8) vorgesehen ist, dem eingangsseitig das Multiplexsignal zugeführt wird, dessen Ausgangssignal auf die zweite Überlagerungsstufe (9) gekoppelt ist und der das Multiplexsignal so verzögert, daß in der zweiten Überlagerungsstufe (9) eine bestmögliche Unterdrückung des in dem Multiplexsignals enthaltenen Pilottons stattfindet.

**6.** Demodulator nach Anspruch 1, **dadurch gekennzeichnet, daß** ein drittes Verzögerungsglied (6) vorgesehen ist, welches dem Multiplizierer (5) nachgeschaltet ist und das ihm zugeführte Signal so verzögert, daß die Signale am Amplitudeneingang und am Phaseneingang des zweiten CORDIC (7) sich zueinander in der gewünschten Phasenlage befinden.

**7.** Demodulator nach Anspruch 1, **dadurch gekennzeichnet, daß** es sich bei dem Multiplexsignal um ein BTSC-Signal handelt, dessen Differenz-Tonsignal komprimiert ist.

**8.** Demodulator nach Anspruch 1, **dadurch gekennzeichnet, daß** es sich bei dem Multiplexsignal um ein FM-Stereo-Tonsignal handelt.

**Claims**

**1.** A digital demodulator for AM demodulation of a difference sound signal in a digital multiplex signal, which multiplex signal also comprises a sum sound signal in the baseband position and a pilot carrier at a pilot frequency, and the difference sound signal is modulated on a carrier at twice the pilot frequency, **characterized in that** CORDICs (1, 7) are provided which perform a co-ordinate transformation of polar co-ordinates into cartesian co-ordinates and which each have a phase input, two amplitude inputs assigned to the co-ordinates x and y and two outputs assigned to the co-ordinates x and y, **in that** a phase-locked loop comprising a first CORDIC (1), a loop filter (2) and an accumulator (4) are provided, which phase-locked loop supplies a phase ramp signal whose repetition frequency is dependent on the input signal of the accumulator, **in that** the multiplex signal at an amplitude input of the first CORDIC (1), the output signal of the accumulator (4) at the phase input of the first CORDIC (1) and that output of the first CORDIC (1) which is not assigned to the same co-ordinate as the used amplitude input are applied to the loop filter (4) whose output signal is superimposed by means of a first superposition stage (3) on a frequency selection signal indicating a pilot nominal frequency, and the output signal of the superposition stage (3) is applied to the accumulator input (4), **in that** a second CORDIC (7) is provided, one amplitude input of which receives the multiplex signal with the suppressed pilot and whose phase input receives the output signal from a multiplier (5) whose input receives the output signal from the accumulator (4) and multiplies said output signal by a factor of two, and **in that** the output of the second CORDIC (7) supplies the demodulated difference sound signal.

**2.** A demodulator as claimed in claim 1, **characterized in that** a third CORDIC (10) is provided which generates the pilot frequency at the exact phase and frequency, **in that** a low-pass filter (13) is provided whose input receives the signal from that output which is assigned to the same co-ordinate as the used amplitude input of the first CORDIC (1), and whose output signal is applied to an amplitude input of the third CORDIC (10) whose output signal is superimposed in a second superposition stage (9) on the multiplex signal at that output which is assigned to the same co-ordinate as the used amplitude input, the output of the second superposition stage (9) supplying the signal with the suppressed pilot which is applied to the amplitude input of the second CORDIC (7).

**3.** A demodulator as claimed in claim 2, **characterized in that** the output signal of the low-pass filter (13) is applied to a lock detector (15) which detects when the phase-locked loop is in the locked state and supplies a lock detector

7

signal in dependence upon which the output signal of the third CORDIC (10) and the input signal of the second CORDIC (7) are passed on by means of switches (16, 17) only when the phase-locked loop is in the locked state.

4. A demodulator as claimed in claim 2, **characterized in that** a sound signal low-pass filter (12) is provided which receives the output signal from that output of the second CORDIC (7) which is not assigned to the same co-ordinate as the used input, which receives the output signal delayed by means of a first delay member (11) of the second superposition stage (9), and which supplies the demodulated difference sound signal as well as the filtered sum sound signal at its output.

5. A demodulator as claimed in claim 2, **characterized in that** a second delay member (8) is provided whose input receives the multiplex signal and whose output signal is applied to the second superposition stage (9), and which delays the multiplex signal in such a way that the pilot in the multiplex signal is optimally suppressed in the second superposition stage (9).

6. A demodulator as claimed in claim 1, **characterized in that** a third delay member (6) is provided which is arranged behind the multiplier (5) and delays the signal applied thereto in such a way that the signals at the amplitude input and the phase input of the second CORDIC (7) are mutually in the desired phase position.

7. A demodulator as claimed in claim 1, **characterized in that** the multiplex signal is a BTSC signal whose difference sound signal is compressed.

8. A demodulator as claimed in claim 1, **characterized in that** the multiplex signal is an FM stereo sound signal.

**Revendications**

1. Démodulateur numérique pour la démodulation AM d'un signal audio différentiel contenu dans un signal de multiplexage numérique, dans lequel le signal de multiplexage contient par ailleurs un signal audio de somme en position de bande de base et une porteuse pilote avec une fréquence de tonalité pilote et dans lequel le signal audio différentiel est modulé sur une porteuse avec le double de la fréquence de la tonalité pilote, **caractérisé en ce que** l'on prévoit des CORDIC (1,7) qui effectuent une transformation de coordonnées, de coordonnées polaires en coordonnées cartésiennes, et qui présentent respectivement une entrée de phase, deux entrées d'amplitude affectées aux coordonnées x ou y et deux sorties affectées aux coordonnées x ou y, qu'il est prévu un circuit de réglage de phase avec un premier CORDIC (1), un filtre de boucle (2) et un accumulateur (4) qui délivre un signal de déclivité de phase dont la fréquence de répétition dépend du signal d'entrée de l'accumulateur, que le signal de multiplexage est affecté à une entrée d'amplitude du premier CORDIC (1), le signal de sortie de l'accumulateur (4) à l'entrée de phase du premier CORDIC (1) et la sortie du premier CORDIC (1) qui n'est pas affectée à la même coordonnée que l'entrée d'amplitude utilisée, au filtre de boucle (4) dont le signal de sortie est couplé à l'aide d'un premier étage de superposition (3) avec un signal de sélection de fréquence qui indique une fréquence de consigne de la tonalité pilote et le signal de sortie de l'étage de superposition (3) est couplé sur l'entrée de l'accumulateur (4), qu'il est prévu un deuxième CORDIC (7) sur l'une des entrées d'amplitude duquel est couplé le signal de multiplexage avec la tonalité pilote supprimée et sur l'entrée de phase duquel est couplé le signal de sortie d'un multiplicateur (5) auquel est couplé côté entrée le signal de sortie de l'accumulateur (4) et qui multiplie celui-ci par un facteur deux et que le deuxième CORDIC (7) délivre côté sortie le signal audio différentiel démodulé.

2. Démodulateur selon la revendication 1, **caractérisé en ce qu'**un troisième CORDIC (10) est prévu et produit la fréquence la de tonalité pilote avec une phase et une fréquence exactes, qu'il est prévu un filtre passe-bas (13) à l'entrée duquel est couplé le signal de la sortie qui est affectée à la même coordonnée que l'entrée d'amplitude utilisée du premier CORDIC (1) et dont le signal de sortie est couplé à une entrée d'amplitude du troisième CORDIC (10) dont le signal de sortie à la sortie qui est affectée à la même coordonnée que l'entrée d'amplitude utilisée est superposé dans un deuxième étage de superposition (9) au signal de multiplexage, dans lequel le deuxième étage de superposition (9) délivre côté sortie le signal avec la tonalité pilote supprimée, qui est couplé sur l'entrée d'amplitude du deuxième CORDIC (7).

3. Démodulateur selon la revendication 2, **caractérisé en ce que** le signal de sortie du filtre passe-bas (13) est guidé sur un détecteur de verrouillage 15 qui détecte quand le circuit de réglage de phase se trouve dans l'état bloqué et qui délivre un signal de détecteur de verrouillage en fonction duquel le signal de sortie du troisième CORDIC (10) et le signal d'entrée du deuxième CORDIC (7) ne sont commutés à l'aide de commutateurs (16, 17) que lorsque le circuit de réglage de phase se trouve à l'état bloqué.

4. Démodulateur selon la revendication 2, **caractérisé en ce qu'**il est prévu un filtre passe-bas de signal audio (12) auquel sont amenés le signal de sortie de la sortie du deuxième CORDIC (7) qui n'est pas affecté à la même coordonnée que l'entrée utilisée et le signal de sortie du deuxième étage de superposition (9) retardé à l'aide d'un premier organe retardateur (11) et qui délivre côté sortie le signal audio différentiel démodulé ainsi que le signal audio de somme filtré.

5. Démodulateur selon la revendication 2, **caractérisé en ce qu'**il est prévu un deuxième organe retardateur (8) auquel est amené côté entrée le signal de multiplexage dont le signal de sortie est couplé au deuxième étage de superposition (9) et qui retarde le signal de multiplexage à tel point qu'une suppression optimale de la tonalité pilote contenue dans le signal de multiplexage intervienne dans le deuxième étage de superposition (9).

6. Démodulateur selon la revendication 1, **caractérisé en ce** qu'il est prévu un troisième organe retardateur (6) qui est monté en aval du multiplicateur (5) et qui retarde le signal qui lui est amené de telle sorte que les signaux à l'entrée d'amplitude et à l'entrée de phase du deuxième CORDIC (7) se trouvent réciproquement dans la position de phase souhaitée.

7. Démodulateur selon la revendication 1, **caractérisé en ce que** le signal de multiplexage est un signal BTSC dont le signal audio différentiel est comprimé.

8. Démodulateur selon la revendication 1, **caractérisé en ce que** le signal de multiplexage est un signal audio stéréo FM.